Europäisches Patentamt

European Patent Office

Office européen des brevets

(19)

(11) Publication number: **0 417 305 A1**

## (12) EUROPEAN PATENT APPLICATION
### published in accordance with Art. 158(3) EPC

(21) Application number: 90903942.2

(22) Date of filing: 06.03.90

(86) International application number:
PCT/JP90/00290

(87) International publication number:
WO 90/10875 (20.09.90 90/22)

(51) Int. Cl.5: **G01N 35/00**

(30) Priority: 07.03.89 JP 52759/89
11.04.89 JP 92366/89
· 31.01.90 JP 20645/90

(43) Date of publication of application:
20.03.91 Bulletin 91/12

(84) Designated Contracting States:
BE CH DE FR GB IT LI NL SE

(71) Applicant: IDEMITSU PETROCHEMICAL CO. LTD.
1-1, Marunouchi 3-chome Chiyoda-ku
Tokyo 100(JP)

(72) Inventor: TAKASE, Minoru Idemitsu
Petrochemical Co., Ltd.
1660, Kamiizumi Sodegaura-cho Kimitsu-gun
Chiba-ken 299-02(JP)
Inventor: YAMAJI, Kazutaka Idemitsu
Petrochemical Co., Ltd.
1660, Kamiizumi Sodegaura-cho Kimitsu-gun
Chiba-ken 299-02(JP)
Inventor: AIZAWA, Masuo
19-14, Amanuma 2-chome Suginami-ku
Tokyo 167(JP)
Inventor: NAGASHIMA, S. Idemitsu
Petrochemical Co., Ltd.
1660, Kamiizumi Sodegaura-cho Kimitsu-gun
Chiba-ken 299-02(JP)
Inventor: SHIBATA, K. Idemitsu Petrochemical
Co., Ltd.
1660, Kamiizumi Sodegaura-cho Kimitsu-gun
Chiba-ken 299-02(JP)

(74) Representative: Hoeger, Stellrecht & Partner
Uhlandstrasse 14 c
W-7000 Stuttgart 1(DE)

(54) ANALYZER OF LIQUID SAMPLE AND ANALYZING METHOD OF LIQUID SAMPLE USING SAID ANALYZER.

(57) This invention relates to a liquid sample analyzer used for analyzing various liquid samples such as blood and urine and an analyzing method by using the analyzer, and can make the analyzer compact, can automate the analysis and can improve accuracy. The analyzer has the construction wherein a flow path (102) is disposed on a disc (101), a reagent is fixed onto this flow path (102) to form a reagent portion (104), and liquid sample supply means (9) for supplying the liquid sample to the reagent portion (104) and means for measuring the reaction product are disposed. The analyzing method of the liquid sample uses this analyzer and conducts in succession the supply of the liquid sample, the reaction between the reagent and the liquid sample and the measurement of the reaction product obtained by the reaction, on the disc.

# F I G. 1

# ANALYSIS APPARATUS FOR LIQUID SAMPLES AND METHOD OF ANALYZING LIQUID SAMPES USING THE ANALYSIS APPARATUS

## Technical Field

The present invention relates to an analysis apparatus for liquid samples and a method of analyzing liquid samples using the analysis apparatus. More particularly, it relates to an analysis apparatus for liquid samples and a method of analyzing liquid samples using the analysis apparatus, in which a reaction of the liquid samples and reactive reagents is carried out on a disk and a measurement of the characteristics of reactive products is then carried out, so that an assay of contents of the liquid samples such as blood, urine or body fluids is automatically carried out by a simply constructed apparatus, with a high accuracy.

## Background Art

Recently, due to the increase of recognition for the need for health care, the necessity for tests of the contents of blood and urine based upon a qualitative analysis and quantative analysis in medical institutions has greatly increased year by year.

For example, it has become necessary to cause a liquid sample such as blood serum to be reacted by a variety of reactive reagents, to detect hormones, vitamins, new types of viruses or immunuty substances which are contained in very amall amounts in the liquid, so that many diseases, particularly, cancer and AIDS, can be easily detected. A prior art dry film method in which reactive reagents are contained in a film, and a dropped liquid sample thereon, and a determination is made on the basis of a change of the color thereof, is a simple measurement method, but suffers from a low analysis accuracy. Conversely, a method using an automatic chemical apparatus disclosed in, for example, Japanese Unexamiened Patent Publication (kokai) No. 61-193072 is known as an example on the use of a bulky and complex apparatus. A groove reactive channel having a fluid restriction means in a radial direction of a rotatable disk is formed, a reactive test is attached to the reactive channel, a liquid sample supplied to the disk is moved by a centrifugal force of the disk in the radial direction, the liquid sample reacts with a reactive reagent, the resultant reactive products are picked up by a suitable probe, other processes such as an electrophoresis in a gel are carried out, and an analysis needed for analyzing the contents, such as a DNA array determination, is carried out.

Japanese Examined Patent Publication (kokoku) No. 54-36879 discloses a method of analyzing liquid samples and an apparatus therefor. In this method, a plurality of cavities are provided in a radial direction of a rotatable disk, a liquid sample and a reactive reagent react thereat, the resultant reactive products are moved to a chromatocolumn having a liquid separation media for a separation thereat, reactive products passed through the column are received by a tube, and the tube is removed to measure a radioactive dose of the contents in the tube so that an analysis needed for analyzing the characteristics is achieved.

In the above analysis methods, the reaction of the liquid sample and the reactive reagent is carried out by using a rotatable disk, and thus, the reaction is carried out effectively, but, the measurement of the characteristics of the reactive products is carried out by extracting the reactive products outside of the disk and using other measuring means, and accordingly, the construction of the apparatus becomes bulky and complex and the measuring procedure also becomes complex and requires a long analysis time.

Alternatively, Japanese Unexamined Patent Publication No. (kokai) 59-193359 discloses an immunological automatic analysis apparatus. According to this analysis apparatus, a sample is injected to both inlets of a U-shaped tube, bead-like carriers immobilized an antigen (an antibody), which causes an antigen-antibody reaction, are inserted into the tube to cause reaction, and the resultant reactive fluid is extracted outside of the tube and measured by colorimetry or the like. Therefore, the analysis method according to this method requires a complex mechanism for moving, cleaning and separating the carriers, and thus suffers from a very cumbersome procedure.

As prior arts disclosing an automatic test for urine among liquid samples, Japanese Examined Patent Publication No. 53-34758, Japanese Unexamined Patent Publication No. 52-111777, Japanese Examined Patent Publication No. 53-3674, and Japanese Examined Patent Publication No. 53-3675 are known.

In Japanese Examined Patent Publication No. 53-34758, a conveying head of a conveyer holds test papers which are extracted one by one from a cartridge, and the conveyer is reciprocally swung by a gear so that the test paper is dipped into a container containing urine as a test body, and then the test paper is pulled iut of the container and a color-measurement of a reagent portion of the test paper is made by a color-measuring head.

In Japanese Unexamined Patent Publication No. 52-111777, a test paper is formed by a continuous film in which reagent portions are provided at predetermined intervals, the test paper is delivered in one direction to supply urine as the test bodies onto the reagent portions, and color-reacted reagent portions are then color-measured by a colormeter.

In Japanese Examined Patent Publication Nos. 53-3674 and 53-3675, test papers extracted one by one from a cartridge are consecutively sent to a belt, a test tube containing urine as a test body is sent by another belt arranged oppositly to the belt, and the urine is supplied onto reagent portions of the test papers from the respective test tubes to enable a color-measurement of the color-reacted reagents by a colormetric head.

In the above prior arts, however, since the reagent portions are provided on a single test paper or a continuous test paper, the test paper is sent to move so that the urine is supplied to the reagent portions along the of movement thereof and the color-developed reagent portions are then color-measured, and accordingly, a problem arises in that the apparatus is contaminated by the urine and also another problem arises in that many test bodies can not be processed at one time. Furthermore, it is difficult to speed up the test time, and therefore, a long test time is required, and thus it suffers from a low test efficiency.

In addition, since mechanisms are needed for moving the test paper, the apparatus as a whole becomes bulky and complex, and therefore, the apparatus is both bulky and expensive.

Recently, a strong demand has arisen for a method by which a variety of analyses can be efficiently and automatically carried out, and some proposals have been made to meet this demand.

As one of those proposals, for example, a method by which in a dry film method, test items are marked by codes such as barcodes and information on the codes is read to carry out the necessary tests, is proposed.

Also, Japanese Unexamined Patent Publication No. 61-26863 proposed a method by which information on specific test items is displayed as codes on proper portions of a measuring element into which reagents are contained, and the information is read when an analysis is carried out while keeping the measuring element on a disk, so that the analysis is achieved on the basis of the reading.

The dry film method using the codes in the above methods slightly facilitates the test, but suffers from the fundamental disadvantage of the dry film method, per se, i.e., has a disadvantage in that a high analysis accuracy can not be obtained automatically and at a high speed, and accordingly, the method is not of practical use.

Another method used a code-indioation, which is disclosed in Japanese Unexamined Patent Publication No. 61-26863, uses a measuring element containing a reagent therein, and accordingly, the storing and manufacturing of the element prevents a continuous analysis and a short time analysis, and as a result, this method suffers from the disadvantage of an inability to carry out an automatic analysis. Also, the measuring element requires much space, and accordingly, the method suffers from the disadvantage of a limitation of the use of analysis reagents provided on the disk. Furthermore, since the measuring element is kept on the disk, there is a disadvantage of a limitation that the analysis is carried out at only one point in a circumferential direction.

Accordingly, an object of the present invention is to provide a liquid sample analysis apparatus having a simplified construction and an easy operability. Also, another object of the present invention is to provide a liquid sample analysis apparatus having an improved analysis accuracy and enabling an automatic analysis and a variety of analyses at one time, and an analysis method using the apparatus.

Disclosure of the Invention

The construction of a liquid sample analysis apparatus according to the present invention comprises a disk on which are formed a plurality of flow paths which are divided in a circumferential direction, a reagent being fixed to at least one of the flow paths, a rotating means for rotating the disk, a liquid sample supplying means for supplying a liquid sample to said reagent, a measuring means for measuring the contents of resultant reaction products on said disk, the resultant reaction products being obtained after causing a reaction by supplying the liquid sample, and a control means for controlling said disk rotating means, said liquid sample supplying means and said measuring means. According to this construction of the present invention, the apparatus construction is simplified, the operability thereof is improved, and an analysis with a high accuracy is automatically carried out.

Also, a liquid sample analysis method according to the present invention is performed as follows: the liquid sample is supplied onto the reagent on the rotatable disk, to react same threat, and the contents of the resultant reaction products on the disk are measured and analysed. As a result, an easy analysis and and a high analysis accuracy can be achieved.

Brief Description of the Drawings

Figure 1 is a view showing an example of an apparatus according to the present invention.

Figures 2(a) to (d) and figure 3 are plan views of a disk, showing examples of flow path shapes thereon.

Figures 4(a) to (e) are partially cutaway views of a disk, showing the cross sectional shapes of flow paths thereon.

Figure 5 is a plan view of a disk as another example of an arrangement of a reagent portion.

Figures 6 and 7 are plan views of a disk having formats formed thereon.

Figure 8(a) is an enlarged plane view of a portion of the format.

Figure 8(b) is a partial enlarged sectional view of a format on a reflective type disk.

Figure 8(c) is a partial enlarged sectional view of a format on a transparent type disk.

Figure 9 is a view of another example of an arrangement of a head of a measuring means.

Figure 10 is a view of a disk wherein flow paths are inclined downward toward an outer circumference.

Figure 11 is a sectinal view of another example of a method of supplying a liquid sample to a reagent.

Figure 12 is a schematic diagram of a reaction in an embodiment of the present invention.

Best Mode for Carrying Out the Invention

The present invention will be described in more detail with reference to the accompanying drawings.

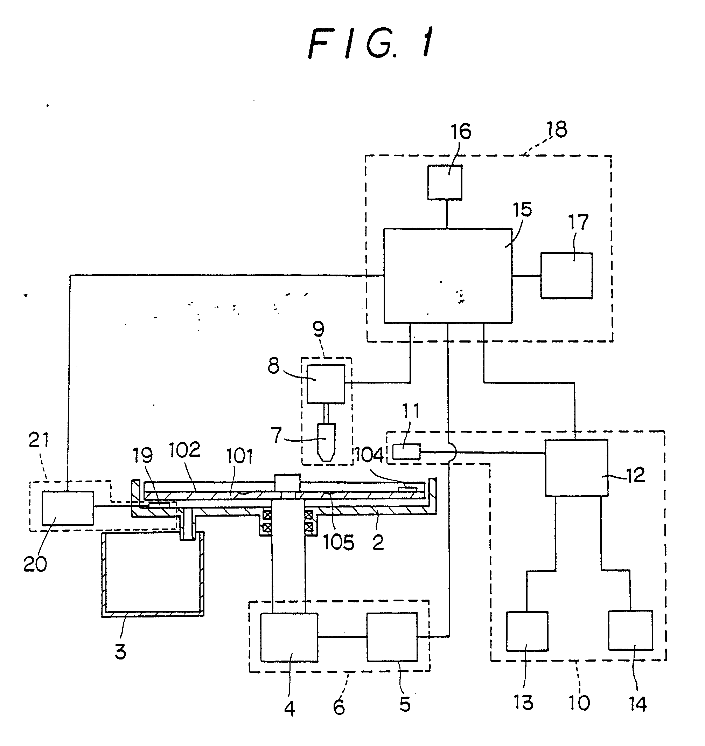

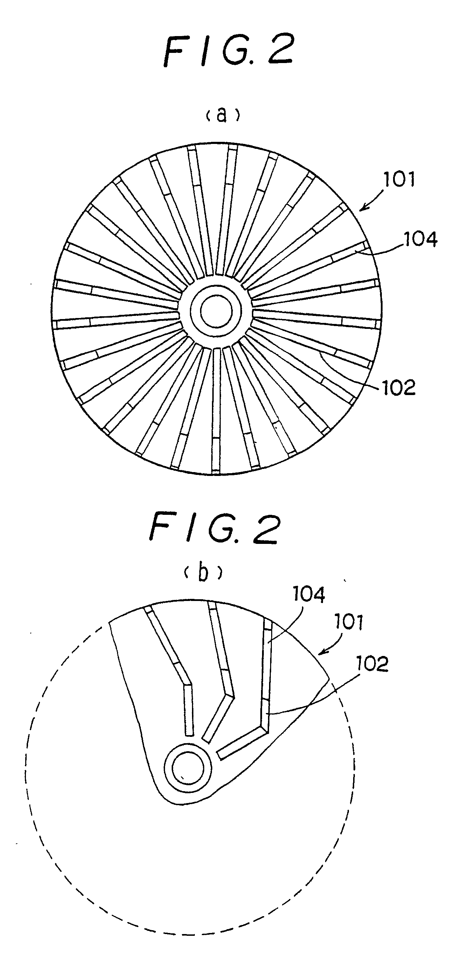

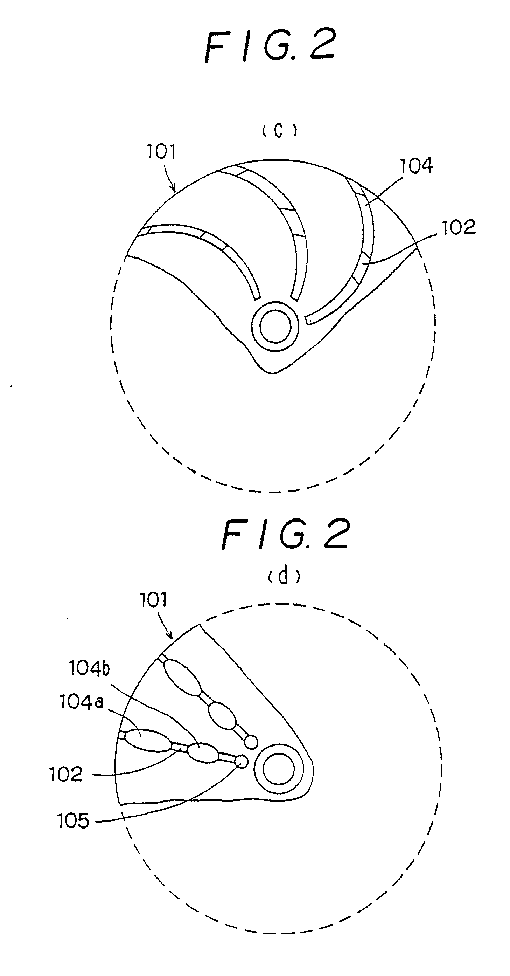

In Fig.1, 101 is a disk, and a upper surface of thereof is divided in a circumferential direction to form a plurality of flow paths 102. Figures 2(a) to (d) show examples of the flow paths 102 when formed as grooves.

The flow paths 102 may be line-like paths extending in a radial direction, as shown in Fig. 2-(a), or bent paths or curved paths, as shown in Figs. 2(b) or (c). This construction enables an easy flow (movement) of liquid samples and cleaning liquids by a centrifugal force become, to prevent a mixture of the liquids between flow paths. Also, the flow paths 102 can be partially dilated as shown in Fig. 2(d).

A width and a length of the respective flow paths 102 are not limited, but in a blood serum analysis or the like, usually, a width of 1 to 10 mm, a length of 50 to 100 mm, and a depth of 0.1 to 2 mm are used.

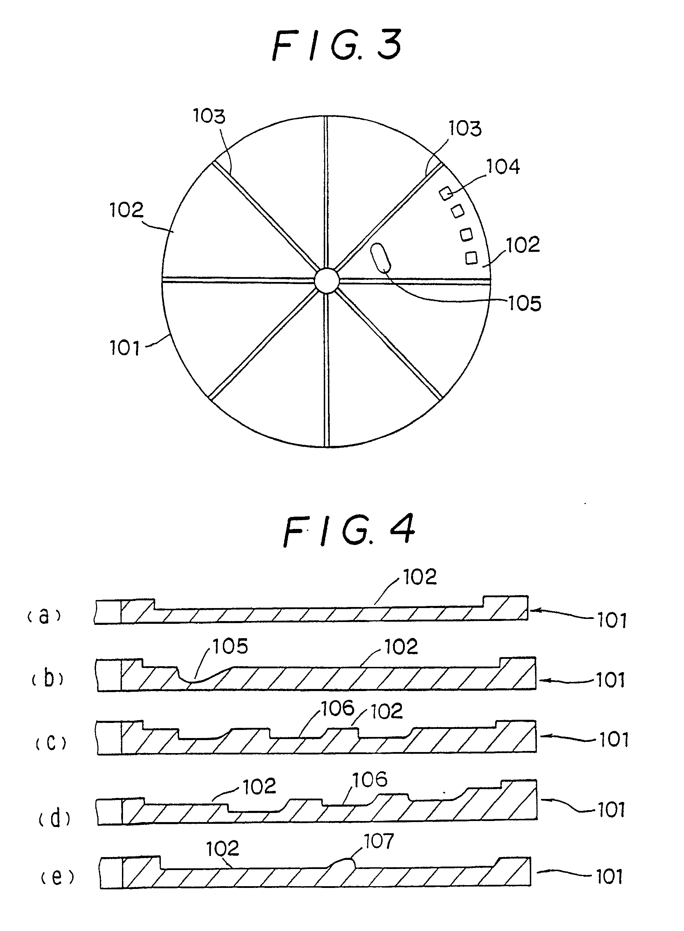

Figure 3 shows an example of the surface of the disk when divided in a circumferential direction by projected strips 103 to form delta shaped flow paths 102.

As the sectional shapes (radial directianal sections) of the flow paths 102, many shapes can be considered; for example, the shapes as shown in Figs. 4(a) to (e) can be used. Figure 4(a) shows simple groove flow paths, Fig.4(b) shows paths having liquid sample drop portions 105, Fig.4(c) shows paths provided with deep groove portions 106 spaced at predtermined intervals, Fig.4(d) shows paths having steps attached to the deep groove portions 106 in Fig.4(c), and Fig.4(e) shows paths, like the groove flow paths 102 provided with projections 107.

Usually, the deep groove portions 106 may be reagent portions 104, described later, or may be the liquid sample drop portions 105. The liquid sample drop portions 105 are positioned at an inner circumference of the reagent portions 104.

The materials of the disk are not limited, but molds of resins such as a polycarbonate, an acryle or a polystyrene are preferable, and surface treated materials corresponding to the samples and reagents can be used.

The reagent portions 104 on which the reagents, i.e., the reactive products are fixed, are formed by fixing many reagents on any one portion or on a plurality of portions of at least one flow path 102 among a plurality of flow paths 102. The fixing of the reagents is carried out by a method by which the reagents directly printed or painted thereon, a method by which a substance containing the reagents is stuck thereto, or a method by which the reagents are absorbed after an absorber is coated thereon.

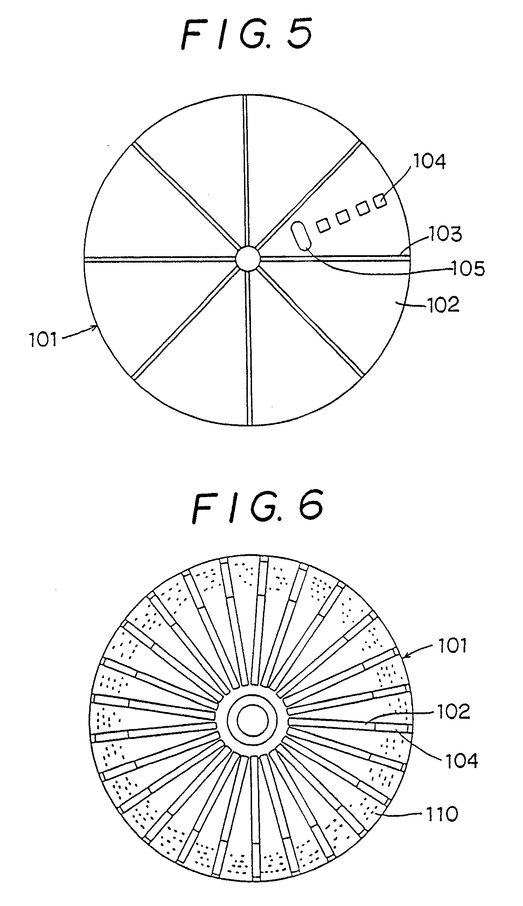

As modes of providing the reagent portions 104 at a plurality of portions, there is a mode of providing same in a radial direction (for example, Fig.2(d) and Fig.5), a mode of providing same in a circumferential direction (for example, Fig.3), and a mode of providing same in both the radial direction and the circumferential direction.

Here, as the reagents, i.e., as the reactive substances, for example, an immunity active substance can be used. This immunity active substance reacts with a liquid sample described later.

To facilitate the measurement of the contents of the reactive products, labeled (marked) antigens (second reagents) can be painted at an inner circumference portion of the flow paths 102, i.e., the most adjacent portions of the inner circumference of the disk, together with the reactive substances (first reagents). The labeled antigen is preferably a substance labeled by a known fluorescent substance, such as Fluorescein, Rhodamine or the like. When such labeled antigens (the second reagents) are used, antigens which react extraordinarily reacts with the liquid samples and the labeled antigens (the second reagents) are used, as the above mentioned reactive substances (the first reagents).

Dams can be provided at an outer circumference of the disk 101. AT the lower portion of the outer circumference of the disk 101, as shown in Fig.1, a receiving dish 2 which receives the sample dropped from the disk 101 is arranged at the circumference of the disk 1, and the samples are collected from the receiving dish 2 into a collecting tank 3.

A servomotor 4 such as a pulse motor is connected to the disk 101, the servomotor 4 is driven and controlled by a drive control circuit 5, and the servomotor 4 and the drive control circuit 5 form a disk rotating means 6 for rotating the disk 101. Preferably, the rotating means 6 is capable of a stable rotation up to approximately 3000 rpm.

A nozzle 7 which supplies the liquid samples is arranged at the above inner circumferential side of the disk 101 than the above mentioned reagent portions 104, the nozzle 7 is connected to a sample sending apparatus 8, which consecutively sends the respective liquid samples to be tested to the nozzle 7, and the nozzle 7 and the sample sending apparatus 8 form a liquid sample supplying means 9 which supplies different liquid samples to the respective flow paths 102. When the liquid sample drop portions 105 are provided on the flow paths 102, the nozzle 7 is positioned above the sample drop portions to thereby supply the samples by dropping same onto the liquid sample drop portions 105.

The liquid sample supplying means 9 can be any means which can supply a neccessary amount ($\mu$ 1 unit) of liquid sample and the reagent to predetermined positions on the flow paths 102, and a microprobe attached to a communication position control mechanism can be used.

Many types of samples can be used as the liquid samples to be analyzed in the present invention, and particularly, liquid samples, such as whole blood liquid, blood serum, urine, and humors can be effectively used for the analysis.

When the analysis is carried out by using whole blood liquid, a film filter (not shown) is provided on the disk 101, and blood cells and blood serum are separated by the film filter so that the blood serum can be used. Also, the blood serum from which blood cells are previously removed by a centrifugal separator can be used.

The characteristics of the reactive products produced by the reaction of the samples and the reagents are measured by a measuring means 10. The measuring means 10 which uses, for example, a colorimeter, and carries out a qualitative and quantative processing of the reactive products on the basis of a density change, is constructed as follows.

Namely, a measuring head 11 having a light emitting portion and a light receiving portion (both not shown) is arranged above the reagent portions 104 in the disk 101, the color-developed reagent portions 104 are exposed to a light emitted by the light emitting portion, and light reflected therefrom is received thereat. The head 11 is connected to a signal processing unit 12, and the signal processing unit 12 has a function which turns on a light source of the light emitting portion in the head 11 upon receiving an input of a predetermined signal to start the colorimetry, a function which wave-processes the light received at the light receiving portion by a filter, a function which converts the wave-processed light to an electric signal, and a function which processes the electrical signal obtained by the light to electric conversion to make quantitative or qualitaive analysis of the content of each of the samples. A display unit 13 and a recording unit 14 are connected to the signal processing unit 12, and the results of the qualitative or quantative analysis obtained by the signal processing unit 12 are displayed at the display unit 13 and are printed out by the recording unit 13. A measuring means 10 is comprised of the head 11, the signal processing unit 12, the display unit 13 and the recording unit 14.

When the first reagent and the second reagent are used as the reagent, for example, when a Fluoroimmunoassay method in which a labeled antigen labeled by a fluorescence substance is used as the second reagent, is applied, since the resultant reactive products can be quantified by a fluorescene analysis, a known fluorescene analizing measurement apparatus is used as the measuring means.

A plurality of heads 11 or a single head 11 can be provided to measure the reaction of all reagent portions 104.

Usually, the measuring head 11 is provided at the outer circumference of the disk 101, but it can be formed as a movable structure if required.

The drive control circuit 5 of the above mentioned disk rotating means 6, the sample sending apparatus 8 of the above mentioned sample supplying means 9, and the signal processing unit 12 of the above mentioned measuring means 10 are respectively connected to a CPU (central processing unit) 15, and the disk rotating means 6, the sample supplying means 9 and measuring means 10 are operated by the CPU 15 in accordance with a predtermined program. Specifically, each control needed for the sample test automation, such as a rotation speed and a timing for a start and stop of the rotation of the disk rotating means 6, and an operation timing of the sample supplying means 9 and the measuring means 10, is carried out by the CPU 15 in accordance with the program. The program is set by an operation unit 16, and stored in a memory unit 17.

A control means 18, which controls the disk rotating means 6, sample supplying means 9, and the measuring means 10 in accordance with the program to automatically carry out the sample test operation, is composed of the CPU 15, the operation unit 16, and the memory unit 17.

Sensor (not shown) which detects the positions of the respective flow paths 102 of the disk 101 can be connected to the CPU 15, and the test of the samples may be automatically carried out while supplying a predetermined amount of samples to the predetermined flow paths 102 and confirming the test of the samples in the predetermined flow paths 102 by the measuring means 10, in response to signals from the sensors.

Now, an example wherein urines are used as the liquid samples and the analysis is carried out by the colorimeter will be explained.

When a start switch provided on the operation unit 16 of the control means 18 is operated, the disk 101 is rotated by the disk rotating means 6 at a low speed, to thereby consecutively supply urine as different test bodies from the nozzles 7 of the liquid sample supplying means 9 to the respective flow paths 102 in the disk 101. Thereafter, the rotation speed of the disk 101 is increased to the urine supplied to the respective flow paths 102 to flow toward the outer circumference due to the resultant centrifugal force, and thus supply the urine to the respective (color reactive) reagent portions 104 to cause a color reaction of the reagent portions 4. Surplus urine is dropped from the disk 101, received at the receiving dish 2, and collected at the collecting tank 3.

The above projected strips 103 which divide the respective flow paths 102 in the circumferential direction are linear in the example shown in the drawing, but can be curved to facilitate a smooth flow of the urine by the centrifugal force due to the ratation of the disk.

Next, the rotation of the disk 101 is stopped, to cause a sufficient color-reaction of the reagent portions 104 by contact with the urine, and then, the disk 101 is again rotated by the disk rotating means 6 at a low speed. While the disk 101 is rotated at a low speed, the detection of the color-reaction of the reagent portions 104 is started by the head 11 of the (colormetric) measuring means 10, in response to the signals from the CPU 5. This detection of the color reaction is carried out for the reagent portions 104 in the respective flow paths 102, by the rotation of the disk 101. While the respective flow paths 102 are determined in response to signals from the CPU 15, which drives and controls the disk rotating means 6, and signals sent from the above mentioned test surface detecting sensors through the CPU 15, each content in the urine is qualitatively or quantatively analyzed. The results are displayed at the display unit 13 and printed out by the recording unit 14.

In the present embodiment of the present invention, as mentioned above, since a plurality of flow paths 102, which are divided on the rotating disk 101 in the circumferential directin, are provided and the reagent portions 104 are provided on the respective flow paths 102, by rotating the disk 101 the respective flow paths 102 can be consecutively brought to face the nozzles 7 of the liquid supplying means 9, to thereby consecutively supply the urine to the respective flow paths 102. Also, by rotating the disk 101, the reagent portions 104 in the respective flow paths 102 are consecutively brought to face the heads 11 of the measuring means 10, to enable a consecutive colorimetering of the respective color-reacted reagent portions 104. Further, each process of the supply of the urine to the reagent portions 104 and the colorimetering of the color-development-reacted reagent portions 104 can be carried out at the flow paths 102, which are small spaces on the disk 101, resulting in a simple and compact construction of the whole analysis apparatus.

Also, since the disk rotating means 6, the liquid sample supplying means 9, and the measuring means 10 are respectively controlled by the control means 18, the urine analysis test operation consisting of the above mentioned processes can be carried out automatically and continuously, and a simultaneous test operation for different urine asamples at the same test flow paths 102 can be achieved.

The colorimetering of the reagent portions 104 by the heads 11 of the measuring means 10 can be carried out while the rotation of the disk 101 is stopped, when the disk 101 is intermittendly rotated, or with a continuous rotation of the disk 101.

To enable the next test operation for urine after completion of the above test operation, the disk 101 can be attachably and detachably mounted to a drive shaft of the servomotor 4 of the disk rotating means, to enable an exchange of the disk 101, or the disk 101 can be constructed by a lower disk body and a upper thin-plate like testing plate, and a testing plate having a surface on which a test surface 3 is mounted can be attachably and detachably mounted to the disk body to enable an exchange of the test plate. In addition, the whole disk 1 can be cleaned by a cleaner after completion of the previous urine test operation, to enable a next urine test operation. Next, an example of the liquid sample analysis method where the labeled antigens (the second reagents) are used together with the reactive substances (the first reagents) will be explained.

The measurement of the reaction products can be facilitated by using the labeled antigens (the second reagents) together with the reactive product substances (the first reagents). Preferably, the labeled antigens can be painted on the inner circumference of the flow paths 102. For example, in Fig.2(d), the reactive products (the first reagents) are immobilized on reagent portions 102a of the outer circumference of the flow paths 102, and the labeled antigens (the second reagents) are painted on reagent portions 102b of the inner circumference. As the labeled antigens, substances which are labeled by radioisotopes, enzymes, fluorescent substances or the like can be used.

The liquid samples are supplied to the inner circumference portion other than the portions holding the labeled antigens 104b , which are the second reagents. Next, the disk 101 is rotated by the disk rotating means 6 to move the liquid samples by the resultant centrifugal force and cause a dissolving and mixing of same with the labeled antigens. When fully mixed, the rotation speed of the disk 101 is increased to move the dissolved and mixed material to the outer circumference of the disk 101, and cause an antigen-antibody reaction of same with the reactive substance (fixed antigen)104a fixed at the outer circumferece and the first reagents.

An immunity analyzing method suitable for quantifying minute contents in the blood, the urine or the humror, uses an antigen-antiboby reaction which occurs between specific antigens and antibodies, and usually radioisotopes, enzymes, fluorescent substances or the like can be used.

After the reaction set forth above has occurred, a cleaning liquid is flew, if necessary, and the rotaton speed of the disk 101 is increased to collect a part of the reactive liquid including nonreacted substances in the collecting tank 3, through the receiving dish 2 provided outside of the outer circumference of the disk.

Next, the required contents of the residual reactive products are tested by the heads 11 on the disk 101. For example, when the labeled antigens labeled by the fluorescent substance are used, an intensity of fluorescence of the residaul reactive products is measured to obtain an amount of the antigens in the liquid samples.

If the above liquid samples contain the antibody, the above labeled antigens (the second reagents) are used as labeled antibodies, and fixed antibodies (the first reagents) are used as the fixed antibodies to carry out the measurement.

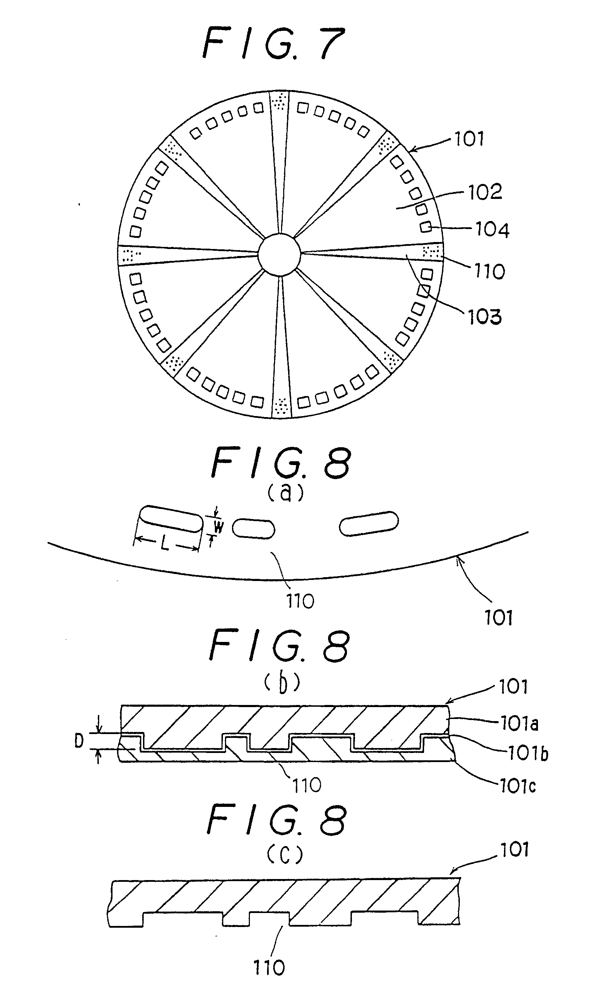

Next, an example where the disk 101 has information formats 110 needed for the analysis will be described. Figure 6 shows an example of the formats 110 formed on the groove shape flow paths 102, and Fig. 7 shows an example of the formats 110 formed on the delta-shaped flow paths 102.

The formats 110 are provided at positions other than on the flow paths 102 of the disk 101, and information on the many items needed for the tests, such as the date of manufacture, a manufactured unit (number), test items, rotation speed of the disk, movement of the detecting portion, determination of the rotation of the disk (positioning), detection time after an injection of the liquid, and wavelength of the detecting light source are recorded on the formats. The information needed for printing (painting) the reagents on the disk, such as the grades of the reagents and printing position information also can be recorded.

The analysis apparatus reads the formats 110 and controls the respective components of the apparatus on the basis of the information read from the formats 110, to carry out the analysis.

The formats 110 have unevennesses read by an optical reading means and functioning as bit signals. The sizes of these unevennesses can be arbitrarily selected, and when read by a converged laser light, preferably each thereof has a length (L) of 1.0 to 10 $\mu$m, a width (W) of 1.0 to 2.0 $\mu$m, and a depth (D) of 100 to 2000 Å (see Figs.8(a9 and (b)).

The formats 110 are usually formed on a rear surface of the disk 101, but can be formed on a front surface, or can be formed on both the rear surface and surface, in accordance with the mode of use of the disk, and the reading and processing method, and the mode of the analysis apparatus.

As a signal processing method of the format, there are used a reflection method in which the signals are read on the basis of the amplitudes of light reflected from the bit portions of the formats, and a transparent method in which the signals are read on the basis of the amplitudes of light passed through the bit portions of the formats, and both methods can be adopted in the present invention.

In the reflection method, as shown in Fig. 8(b), a reflecting film (recording film) 101b made of, for example, a metal, pigment resin or liquid crystal, is formed on a disk substrate 101a formed of resin or glass, and if required, a protecting film 101c is formed of a transparent material.

Alternatively, in the transparent method, as shown in Fig.8(c), the unevennesses are directly formed on the disk substrate 101a.

A reading head 19 for reading the formats 110 is arranged above and/or below the formats (below in Fig.1), and the signals read thereby are processed by a signal processing unit 20 to provide predetermined information. A reading means 21 is composed of the reading head 19 and the signal processing unit 20.

The disk 101 having the preencoded signals (formats; hereinafter defined as formats) 110 formed thereon is formed by, for example, a 2P (photo polymerization) method. For the formation (signal write) of the formats 110, there are used a post-formatting method which forms the formats after the formation of the disk, and a preformatting method which forms the formats simultaneously with the formation of the disk, but the preformatting method is preferable from the view point of ease of production and from economic considerations.

When the preformatting method is adopted, usually, a stamper is provided with bits (unevennesses) and the formats 110 are formed during the molding. In this case, recesses or projections used for forming the above flow paths 102, can be provided on the stamper. As a result, the flow paths 102 and the formats 110 can be formed simultaneuosly.

According to the analyzing disk on which the formats 110 are formed at positions at which the formats can be read, a high precision positioning on the order of 10 $\mu$m can be achieved. Accordingly, when the printing (painting) is carried out on the reagent portions 104, an accurate printing of the reagents is carried out while reading the positioning information in the formats 110 and determining the position at a high precision, and therefore, the reagent portions 104 can be packaged (separated) in small areas and many reagent portions can be provided.

Conversely, for the analyzing, the liquid samples can be accurately supplied to the small packaged reagent portions 104 and a precise measurement can be carried out, and therefore, analyses of many items with small liquid samples can be made.

When the analysis is carried out by using the liquid sample analyzing disk formed as mentioned above, the information needed for the analyzing, such as the positioning of the flow paths 102 below the nozzle of the liquid supplying means 9, the positioning of the flow paths 102 below the measuring head of the measuring means 10, the disk, the reagents and the analyzing items are read from the formats 110, and a sequential analyzing operation is continuously and automatically carried out on the basis of information such as the analysis date and the names of the analyzed samples.

The positioning accuracy obtained by the information recorded on the formats can be same as that of an optical disk, and thus very high.

The positioning of the disk for the supply of the sample is accurately carried out, such that the samples can be directly supplied from the nozzle 7 of the liquid sample supplying means 9 onto the reagent portions 104. Accordingly, the necessary amounts of the samples can be accurately supplied to the reagent portions 104. In this case, the flow paths 102 for supplying the liquid samples to the reagent portions 104 can be omitted.

Also, the positioning of the disk during the measuring is accurately carried out, such that the same reagent portions 104 can be searched a plurality of times under exactly the same conditions, and as a result, the analysis accuracy is improved.

The disk having the formats in the present invention is not limited to the above embodiments, and many modifications can be made thereto. For example, as the formats 110, other shapes (barcodes, Japanese "ta" character code, magnetized regions, etc.) other than the above mentioned unevennesses, can be used, or the formats can be formed by a combination thereof, to enable of design of the formats 110 in any shape.

When the formats 110 are formed by the barcodes, the magnetized regions or others, a corresponding reading means is also used.

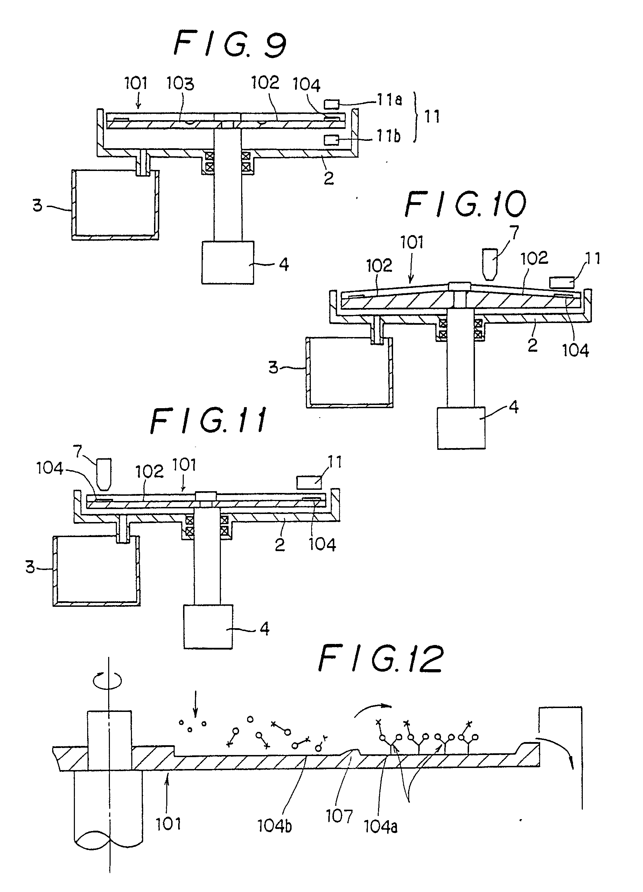

Figures 9 to 11 show other embodiments of the present invention.

Figure 9 shows another embodiment of the measuring head 11 of the measuring means 10. The measuring head 11 in this embodiment is applied when the disk 101 and the reagent portions 104 are formed by transparent materials, and a light emitting portion 11a and a light receiving portion 11b of the measuring head 11 are separately arranged above and below the disk 101.

Figure 10 shows another embodiment of the shape of the disk 101. In this embodiment, the disk 101 is formed in such a manner that a center portion is lifted to form a triangle cross section, and thus the respective flow paths 102 have downward inclined surfaces torward the outer sides thereof. In this construction, when the liquid samples are supplied from 7, to the inner circumference at portion other than those holding the reagent portions 104 of the flow paths 102 the liquid samples flow down the inclined flow paths 102 and are thus supplied to the reagent portions 104. According to this embodiment, a high speed rotation of the disk 101 for supplying the liquid samples to the reagent portions 104 by centrifugal force is not necessary.

Figure 11 shows another method of supplying the samples to the reagent portions 104. In this embodiment, the nozzle 7 of the liquid sample supplying means 9 is positioned just above the reagent portions 104 on the flow paths 102, and the samples from the nozzle 7 are dropped directly onto the reagent portions 104. This embodiment is preferable applied when the above-mentioned format information is used.

The liquid sample supplying means 9 in the above embodoiment uses the nozzle 7, but alternatively, the supply of the liquid samples can be carried out directly from an individual container such as a cup containing the samples or the like, or by using a means such as a disposal dispenser.

In the above embodiments, the receiving dish 2 and the collecting tank 3 are used, but a liquid sample absorber made of absorptive materials can be arranged at the outer circumferential end of the disk 101, to absorb exess liquid samples, and thus a simplification of the apparatus by the omission of the receiving dish and the collecting tank can be realized together with a prevention of a splashing of the liquid samples and the realization of a hygienic test operation.

Examples

Next, an embodiment of the present invention in which the first reagent and the second reagent are used will be explained.

The analysis of the liquid samples are carried out by using an apparatus having a construction similar to that of the analysis apparatus shown in Fig. 1, without the reading means.

The disk 101 in this analysis apparatus was made of polycarbonate having a diameter of 200mm and a thickness of 2mm, and 18 flow paths 102 (depth of grooves 1.0mm, width 4mm and length of the grooves 80mm), spaced at regular intervals along the circumference, were arranged on the upper surface of the disk as shown in Fig.4-(e).

A schematic diagram of this reaction is shown in Fig.12.

First, a carcinoembrionic antigen (CEA) fluorescent marked by Rhodamine B was painted on the inner circumferential portion (hereinafter referred as zone I) of the flow paths 102, and at the outer circumference portion (hereinafter, referred as zone II), the reactive substance (the antibody having an extraordinary reaction with the antigen of the liquid sample and the above-mentioned marked antigen) were immobilized on the reagent portions 104 by a physical absorption method.

Next, 0.2ml (10% solution) of the blood serum as the liquid sample was dropped on the inner most side of the zone I , and the disk 101 was rotated to cause a solving and mixing of the blood serum with the fluorescent marked antigen painted on the zone I. Next, the rotation speed of the disk 101 was increased to move the solution in the zone I to the zone II, to be mixed with the reactive substance immobilized in the flow paths 102 at the zone II, and cause the antigen-antibody reaction. After completion of the reaction, a cleaning fluid (pure water) was introduced, and the disk 101 was again rotated to clean the zones I and II, and thereby remove nonreacted antigens. Thereafter, the antigens which remained in the zone II and had reacted with the antibodies, were quantified by a fluorescent luminous intensity meter, and the CEA was measured. The CEA was 50 X 10 $^{-9}$ g/ml of the blood serum.

Industrial Applicability

As described above, the analysis apparatus for the liquid samples and the analysis method using the analysis apparatus are applied when liquid samples such as blood, urine, humor, and general solution, are analyzed automatically and at a high accuracy.

Particularly, when applied to the analysis of the blood, urine or humor, a variety of substances such as hormones, vitamins, lipids, enzymes, substances containing nitrogen, sugar, antigen substances, and viruses can be detected, to thereby enable a detection of a variety of diseases at an early stage.

**Claims**

1. A liquid sample analysis apparatus comprising:
   a rotatable disk on which a plurality of flow paths divided in a circumferential direction are formed, a reagent being fixed to at least one flow path;
   disk rotating means for rotating said disk;
   liquid sample supplying means for supplying a liquid sample to said reagent;
   measuring means for measuring contents of resultant reactive products, after causing a reaction by supplying the liquid sample; and
   controlling means for controlling said rotating means, said liquid sample supplying means, and said measuring means.

2. A liquid sample analysis apparatus according to claim 1, wherein a single reagent is formed on an outer circumference of the flow path.

3. A liquid sample analysis apparatus according to claim 1, wherein a plurality of reagents are formed in a radial direction of the flow paths.

4. A liquid sample analysis apparatus according to claim 1, wherein a plurality of reagents are formed in a circumferential direction of the flow paths.

5. A liquid sample analysis apparatus according to claim 1, wherein the disk is provided with a format required for the analysis, and further comprising reading means for reading the format.

6. A liquid sample analysis method comprising: fixing a reagent on a flow path formed on the disk; and after suppling a liquid sample to the reagent to cause a reaction, measuring contents of resultant reactive products on said disk to carry out the analysis.

7. A liquid sample analysis method according to claim 6, wherein said method carries out a plurality of operations such as rotation of the disk, supply of the liquid sample and measurement of the reactive products, on the basis of information on a format formed on the disk.

8. A liquid sample analysis method according to claim 6, wherein said method carries out supply of the liquid sample supplied supplied from the liquid sample supplying means to a reagent by a centrifugal force caused by a rotation of the disk.

9. A liquid sample analysis method according to claim 6, wherein siad method carries out supply of the liquid sample supplied from the liquid sample supplying means to a reagent by using a slope of the flow path.

10. A liquid sample analysis method according to claim 6, wherein said method carries out supply of the liquid sample supplied from the liquid sample supplied from liquid sample supplying means to a reagent by directly dropping.

## F I G. 1

# F I G. 2

(a)

# F I G. 2

(b)

# F I G. 2

(C)

# F I G. 2

(d)

# F I G. 3

# F I G. 4

# F I G. 5

# F I G. 6

# F I G. 7

*101*
*102*
*104*
*110*
*103*

# F I G. 8

## (a)

W
L
110
101

# F I G. 8

## (b)

101
101a
101b
101c
D
110

# F I G. 8

## (c)

101
110

FIG.9

FIG.10

FIG.11

FIG.12

# INTERNATIONAL SEARCH REPORT

International Application No PCT/JP90/00290

**I. CLASSIFICATION OF SUBJECT MATTER** (if several classification symbols apply, indicate all) *

According to International Patent Classification (IPC) or to both National Classification and IPC

Int. Cl$^5$ G01N35/00

**II. FIELDS SEARCHED**

Minimum Documentation Searched [7]

| Classification System | Classification Symbols |
|---|---|
| IPC | G01N35/00, 33/52, 33/543 |

Documentation Searched other than Minimum Documentation
to the Extent that such Documents are Included in the Fields Searched [8]

**III. DOCUMENTS CONSIDERED TO BE RELEVANT** [9]

| Category * | Citation of Document, [11] with Indication, where appropriate, of the relevant passages [12] | Relevant to Claim No. [13] |
|---|---|---|
| X | JP, A, 57-114859 (Beringer Mannheim G.m.b.H.), 16 July 1982 (16. 07. 82), & EP, B1, 52769 & DE, A1, 3044385 & US, A, 4515889 | 1 - 10 |
| Y | JP, A, 61-193072 (National Research Development Corporation), 27 August 1986 (27. 08. 86), & GB, A, 8500294 | 1 - 10 |
| Y | JP, A, 56-73347 (Jean Guigan), 18 June 1981 (18. 06. 81), & US, A, 4314968 & FR, B1, 2483078 & FR, B1, 2468909 | 1 - 10 |
| Y | JP, A, 59-56166 (Konica Corporation), 31 March 1984 (31. 03. 84), (Family: none) | 1 - 10 |
| Y | JP, B2, 62-1220 (Miles Laboratories, Inc.), 12 January 1987 (12. 01. 87), & US, A, 4215995 & NL, A, 7904720 | 1 - 10 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 5, 1990 (05. 04. 90) | April 23, 1990 (23. 04. 90) |

| International Searching Authority | Signature of Authorized Officer |
|---|---|
| Japanese Patent Office | |

Form PCT/ISA/210 (second sheet) (January 1985)

| FURTHER INFORMATION CONTINUED FROM THE SECOND SHEET | | |
|---|---|---|
| Y | JP, A, 61-259145 (Konica Corporation), 17 November 1986 (17. 11. 86), (Family: none) | 5, 7 |
| Y | JP, A, 63-138236 (Shimadzu Corporation), 10 June 1988 (10. 06. 88), (Family: none) | 1 - 10 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers ..., because they relate to subject matter not required to be searched by this Authority, namely:

2.☐ Claim numbers ..., because they relate to parts of the international application that do not comply with the prescribed requirements to such an extent that no meaningful international search can be carried out, specifically:

3.☐ Claim numbers ..., because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)